(19) Europäisches Patentamt / European Patent Office / Office européen des brevets

(11) **EP 2 343 207 B1**

(12) **EUROPEAN PATENT SPECIFICATION**

(45) Date of publication and mention
of the grant of the patent:
**23.05.2012 Bulletin 2012/21**

(51) Int Cl.:
**B60K 28/06** (2006.01)

(21) Application number: **09380199.1**

(22) Date of filing: **28.12.2009**

(54) **Assistance system against sleepiness**

Hilfssystem gegen Schläfrigkeit

Système d'assistance contre la somnolence

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**13.07.2011 Bulletin 2011/28**

(73) Proprietor: **Seat, S.A.**
**08760 Martorell, Barcelona (ES)**

(72) Inventors:
• **Fernández González, José Luis**
**08760 Martorell-Barcelona (ES)**

• **Soria Hernández, Antonio**
**08760 Martorell-Barcelona (ES)**

(74) Representative: **Carvajal y Urquijo, Isabel et al**
**Clarke, Modet & Co.**
**c/ Goya, 11**
**28001 Madrid (ES)**

(56) References cited:
**WO-A1-99/32317** **US-A1- 2003 125 855**
**US-B1- 6 927 694**

**Description**

**Field of the invention**

The present invention refers to the automotive field and more specifically to the field of devices and systems for driving assistance and accident prevention.

This system helps avoid accidents caused by lack of consciousness as a result of different circumstances (sleepiness, disease, medication, distraction, etc.), which generate a great number of accidents on the road.

The invention is mainly intended for road professionals, lorry drivers, chauffeurs, taxi drivers, etc. It is also expected that it will be gradually incorporated in private vehicles as another safety measure on board.

**Background of the invention**

There are known in the art systems that detect the state and condition of a vehicle driver by the analysis of several parameters. Some of them can, if a dangerous situation is detected, alert the driver by means of related devices. For example, there exist systems which emit audio or visual alarms; there are also proposals in which the emission of perfume is also activated, the seat is made to move, temperature is affected, etc.

Examples of these kinds of solutions have been found in the following documents:

ES 2 100 790 shows a system of sensors to detect a driver's sleepiness or attention deficit through analysis of the information collected by infrared sensors. The steering wheel angle, vehicle speed, engine revolutions as well as the position of the driver's head are measured.

DE 69 530 459 D1 describes a system to detect a driver's condition in relation to fatigue, sleepiness and impatience. To that end it analyses heart beats, skin vibration and other physiological parameters (RSA, MWSA) related to parasympathetic activity and combines them with the information of a GPS to act through audio alerts, perfume emission and cold air jets to the driver.

US 20070182529 A1 describes an identification method of the work load related to possible dangerous situations generated by the driver. The steering wheel angle, pedal pressure, blinking, skin impedance, cardiac rhythm, cardiac frequency and even blood pressure are evaluated to act on the driver's comfort through the emission of air conditioning, the seat and visual and audio alarms. The system can stop the vehicle through automatic braking.

US 20030125855 A1 discloses, according to the preamble of claim 1, a system for monitoring an interior or exterior environment of a vehicle witch a pixel camera to determine characteristic of objects based on the obtained images.

The driver's physiological parameters which use the existing solutions to identify dangerous situations greatly differ from one another. Particularly, some use invasive measurement techniques. Others have an efficiency limited to highly evident cases (the detection through infrared does not enable to analyze the complexity of facial expressions related to conditions of tiredness, sleepiness, etc.) There are also proposed complicated detection methods which require previous operations to adjust to the driver of the vehicle incorporating them.

As regards the action level on the vehicle, it is neither gradual nor repetitive. It happens as a final solution vis-à-vis an extreme situation without considering elements foreign to the vehicle (environmental, traffic, road conditions).

The focus of the present invention lies on associating the peak speed available to the degree of consciousness. In this regard, the state of the art does not provide any background. It would be therefore desirable to have a system which solves these inconveniences in a joint and global manner. The integration of different technologies enables to analyze the driver's condition and act repetitively according to the road in which s/he drives and other circumstances. No invasive or uncomfortable techniques are used to that end. On the contrary, all measures are imperceptible to the driver.

The present invention distinguishes the activity on the vehicle according to the driver's condition. To that end it measures his/her degree of consciousness, and furthermore it makes sure the kind of road where the driver circulates allows it. As it has been indicated, the activity is performed by gradually reducing the peak speed available in the vehicle with each warning related to a level in the degree of consciousness.

**Description of the invention**

The engine control box checks the driver's degree of consciousness (C) before injecting the fuel the accelerator pedal indicates. So there is a correspondence between the degree of consciousness and the peak speed available.

When the degree of consciousness reduces its level, there is applied a reduction of the peak speed that the vehicle can potentially achieve. Said reduction is fixed by a series of conditioning factors (environmental, kind of road, presence of another passenger, etc.). Thus, in adverse conditions, the speed reduction factor (K) is adjusted to the dangerousness of each situation.

Similarly, when the degree of consciousness reaches a higher level again, there is an increase of the peak speed available.

The present invention has different modules which integrate the devices needed to perform these actions. One module estimates the driver's degree of consciousness (C) and identifies different levels of consciousness, another module gives alerts, a module acts on the vehicle and a detection unit captures the parameters on which it estimates the degree of consciousness, as well as other variables associated to environmental conditions and kind of road.

The system repetitively verifies the driver's condition. When a low degree of consciousness is detected, the system acts reducing the peak speed of the vehicle a certain percentage. If, in a new repetition, the system identifies that the driver's consciousness has been reestablished, it authorizes the previous peak speed again. In the opposite case, if the driver's consciousness keeps decreasing, the system reduces the maximum speed available in another percentage in the vehicle.

At the same time, the system notifies the driver of the situation detected and of the action associated for his/her knowledge through warnings which can be voice messages or through a light indicator.

If the driver is replaced by another one whose degree of consciousness is normal, the invention considers reevaluating the consciousness and disabling the restrictions imposed on the peak speed of the vehicle.

When it is detected that the driver's degree of consciousness is not ideal, the driver or the accompanying passenger can be alerted through passive protection measures. For example, the inner lighting, music system, air conditioning temperature, windows, seat position, etc. can be modified to prevent the driver from sleeping at the wheel.

The invention also foresees that the vehicle has a peak speed above the established legal speed limit (120km/hour for Spain). In order to prevent the number of repetitions and warnings from increasing according to this figure; the first action on the vehicle peak speed consists of reducing it to the legal limit (as long as the maximum speed is higher). Thus, the number of warnings does not depend on the vehicle having a maximum speed limited to 140km/hour or on it being a sports car capable of reaching above 250km/hour.

When the system acts on the vehicle, other risks are evaluated, and it is decided, for example, to postpone the reduction of the peak speed until it is safe to carry that out. In the case of overtaking in a two-way road or a vehicle which is very close, where a speed reduction could cause a collision with a higher risk than the one trying to be avoided. To that end, a GPS system or similar indicates if the road is a dual carriageway or a motorway. Cameras outside the vehicle can also detect if the vehicle is circulating on a two-way road.

As it has been mentioned before, action on the maximum speed in the vehicle is notified to the occupants of the vehicle. It can also be indicated to other vehicles and pedestrians. In that way, other users of the road can be aware of the possible danger posed by that vehicle and take precautions. Particularly, it is possible to alert through action on the lighting (emergency lights, sparkling), the horn, etc. to minimize the danger derived from the speed reduction.

At the same time, the invention also acts to increase the active protection of the vehicle occupants through the pre-tightening of the safety belts.

The environmental conditions are also considered to determine the system response. Rain, snow, ice, etc. condition the action of the system. They are captured using cameras and exterior sensors to transmit them to the system control box.

As regards the assessment of the driver's degree of consciousness, the present invention proposes an estimate based on the following parameters.

$T_p$= time during which the eyelids are shut.

$T_c$= time during which the head is down.

$T_{ic}$= time between nods.

$F_{ic}$=nod frequency.

$T$= total time.

It has been experimentally verified that the time with the eyelids shut, the time there is nodding and their frequency are closely related to the degree of consciousness. All these biological parameters increase with fatigue and other situations which are incompatible with safe driving.

These parameters are combined in a mathematical model, to make estimates on the driver's level of consciousness and the associated risk. The following is a detail explanation of the way in which said model in the invention is implemented.

To calculate the value of the physiological parameters $T_p$, $T_c$ and $T_{ic}$, the invention uses cameras located inside the vehicle. These cameras are connected to an image processing unit featuring recognition routines of a particular driver's face; said recognition is essentially based on the head and eye position. Changes in the blinking frequency, nodding and an inclined position of the head are detected. The system analyzes the face features of a new driver to be able to calculate the physiological parameters in which the calculation of his/her level of consciousness is based. This configuration process only takes a moment and is saved in a memory for its later use.

Biometrics and image recognition technology currently available are integrated to identify a person in a digital image, and to compare certain facial characteristics to obtain the aforementioned physiological parameters. Thus, carrying out the necessary adjustments, this technology enables to detect changes in head position and blinking and associate these changes to behavior patterns. Developing these techniques it is possible to periodically obtain the necessary measurements and said values can be transmitted for calculating the degree of consciousness. Likewise, it is possible to detect the switch of driver and the presence or absence of a passenger.

Additionally, there can also exist exterior cameras to capture information about the kind of road, traffic or environmental conditions.

The present invention differs from other existing models in the state of the art to evaluate an individual's consciousness (mental and physical condition). They have been generally rejected due to their error rate or because of the invasive nature of their measuring methods.

It is important to highlight that image recognition is optimized to avoid false positives, which is a common problem in other similar systems. There are certain situations which can be wrongfully confused with a low level of consciousness. Let us consider a couple of simple examples illustrating this: a nervous tic and a particle in the eye.

A nervous tic has a clearly distinct pattern from that of the blinking caused by tiredness and sleepiness. The geometry is variable in the entire ocular perimeter in the former case. As regards the presence of a foreign body in the eye, it can cause changes in the blinking and it generally causes, besides other associated movements, a movement of the hand towards the face, generating a different pattern. The system, through image recognition techniques, detects these differences and avoids wrongful actions. These and other incidents have been considered and discriminated against to avoid false positives.

## Brief description of the drawings

The following is a brief description of a series of drawings which will help understand better the invention relating to an embodiment of said invention, which is presented as a non-limiting example thereof.

Figure 1 shows a C-T curve representing the degree of consciousness.

Figure 2 represents a diagram of a control box of the system according to a possible embodiment.

Figure 3 shows a summarized flowchart of how the parameter evaluation and decision taking are carried out.

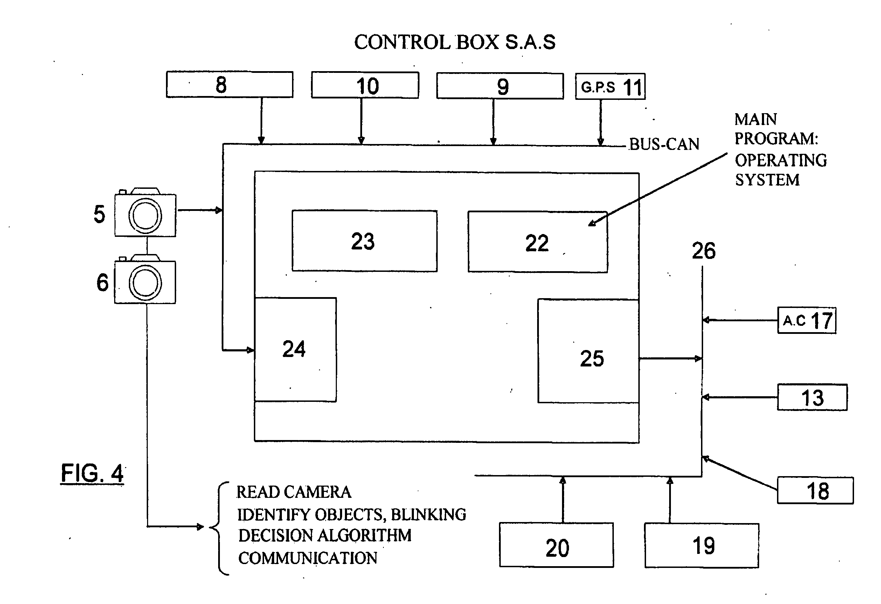

Figure 4 represents a functional block diagram of the invention.

Figure 5 shows a scheme of how the parameter evaluation and decision taking are carried out.

In the aforementioned figures there are identified a series of references corresponding to the elements indicated below, without a limiting sense:

1. - Detection unit.
1a. - Sensing module.
1b. - Image recognition module.
2.- Alert module.
3.- Action module.
4. - Degree of consciousness estimate calculation module.
5.- Interior cameras.
5a.- Chauffer camera.
5b.- Passenger camera.
6.- Exterior cameras.
7.- Distance sensor.
8. - Rain sensor.
9. - Ice sensor.
10. - Night sensor.
11.- GPS
12.- Speedometer.
13. - Music system / Radio.
15. - Lights.
16. - Hom.
17.- Air conditioning.
18.- Indicator panel.
19. - Brakes.
20. - Injection system.

21. - Safety belts.
22.- Flash memory.
23. - Microprocessor.
24. - Input stage.
25. - Bus-CAN controller.
26. - Bus-CAN

## Detailed description of an embodiment

The present invention is additionally illustrated through the following non-limiting example.

First, the model applied to evaluate the degree of consciousness and the speed modification factor is explained.

Mathematic model:

A condition state f(T)=C is defined from the curve f(T)= 1/(4T); where T is calculated using Tic=1/Fic; Tp y Tc values, as:

$$T = (10^*Fic) + Tp + Tc;$$

With a Tp as time in which the eyelids are shut, Tc as time in which the head is in a low position and Fic as nodding frequency from a 0 value until the first is detected. It has been verified that with an ideal degree of consciousness, there is also nodding but they are almost isolated. Values around 30,000s have been experimentally measured.

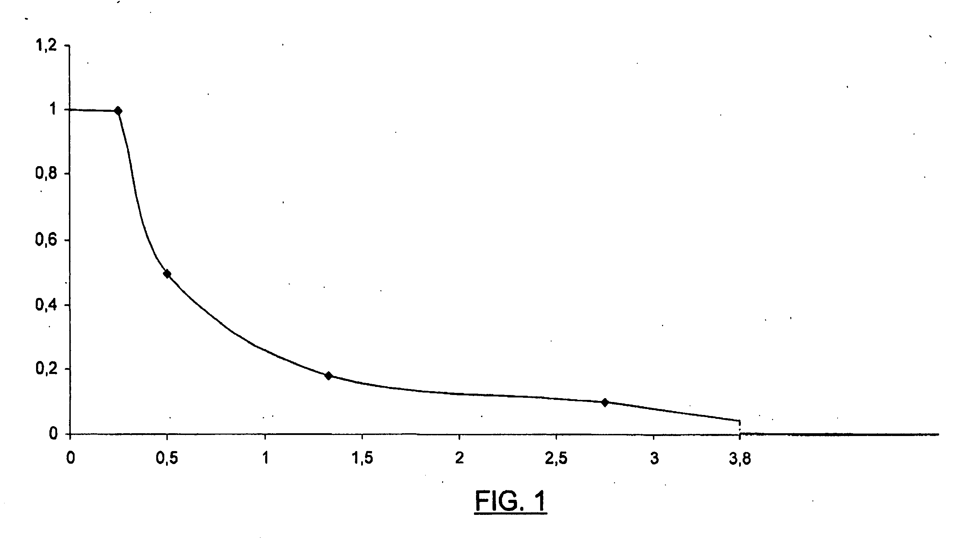

C(T) is defined from T as shown in figure 1:

$$C = 1/(4T) \text{ for } 0.25 < T < 3.8;$$

$$C = 0 \text{ for } T >= 3.8 \text{ s}$$

$$C = 1 \text{ for } T <= 0.25 \text{ s}$$

K represents the speed reduction coefficient the value of which complies with K>=0, K<=1.

The maximum value C=1, corresponds to T<=0.25s, and indicates a maximum level and therefore the ideal degree of consciousness and no reduction of the peak speed available in the vehicle regardless of the K value.

On the contrary, the minimum value C=0 means the vehicle stops.

As it can be seen, C depends on the sum of all times of the biological parameters, that is, blinking, nodding, etc.

K comprises several factors. In the example of an embodiment the following factors are considered: snow, ice, night and passenger during driving. The values assigned to these situations are:

Ka = 0.7 (passenger constant)
Kn = 0.7 (specifies that driving takes place at night)
Kni = 0.4 (driving with fog)
Kh = 0.3 (driving with ice)

Taking the above into account, the reduction of maximum speed available in the vehicle is applied.

Vi: initial speed;

Vf: Peak / maximum speed;

$$Vf = K^*Vi;$$

The following examples illustrate how the invention acts:

We start with a vehicle with a peak speed of 150km/h and a driver driving at night at 100km/h through a dual carriageway, with fog and without a passenger, the factor in which the speed would be reduced is given by:

$$K = Ka{*}Kn{*}Kn_i = 0.7{*}0.4{*}0.7 = 0.196$$

Therefore, if a reduction of the degree of consciousness below certain level is detected, the peak speed is reduced up to approximately 20% (19.6%) of its initial value.

Example 1:

The system through the detection unit (1) calculates the value of the following physiological parameters:

$$Fic=0; \quad Tp= 0.25 \text{ s}; \quad Tc=0;$$

Using these values, the degree of consciousness estimate calculation module (4) carries out the following calculations:

$$T1= 10{*}Fic + Tp + Tc = 0.25 \text{ s};$$

$$C1 = 1/(4{*}0.25) = 1;$$

This indicates an ideal degree of consciousness. Therefore, the speed reduction by the factor K=0.196 is not applied.

Example 2:

Given a nod every 100 seconds (Fic=0.01), a time with the eyes shut of Tp=0.20s and a time with the head down of Tc=0.15s, the degree of consciousness estimate calculation module (4) carries out the corresponding calculations:

$$T2= 10{*}Fic + Tp + Tc = 0.1 + 0.20 + 0.15 = 0.45 \text{ s};$$

$$C2 = 1/(4{*}0.95) = 0.55;$$

Example 3:

The initial situation is the same except in that the physiological parameters are different. The system with the detection unit (1) and through interior cameras and some image recognition algorithms calculates the value of the following physiological parameters:

Given a nod every 10 seconds (Fic=0.1), a time with the eyes shut of Tp=0.75s and a time with the head down of Tc=1s, the degree of consciousness estimate calculation module (4) carries out the corresponding calculations:

$$T3= 10{*}Fic + Tp + Tc = 1 + 0.75 + 1 = 2.75 \text{ s};$$

$$C3 = 1/(4^*2.75) = 0.09;$$

Levels and actions:

The degree of consciousness obtained C is compared to some previously fixed thresholds in the degree of consciousness estimate calculation module (4) which define different levels of consciousness (L.A.) and which are associated to the same type of action and alarm. Thus, depending on the level where C is found, the action module (3) decides upon a particular action using the information periodically provided by the degree of consciousness estimate calculation module (4).

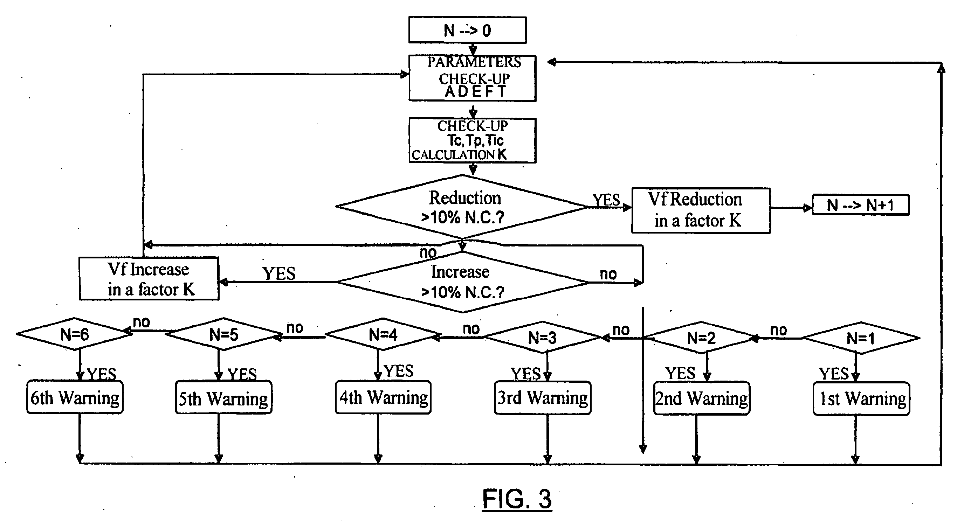

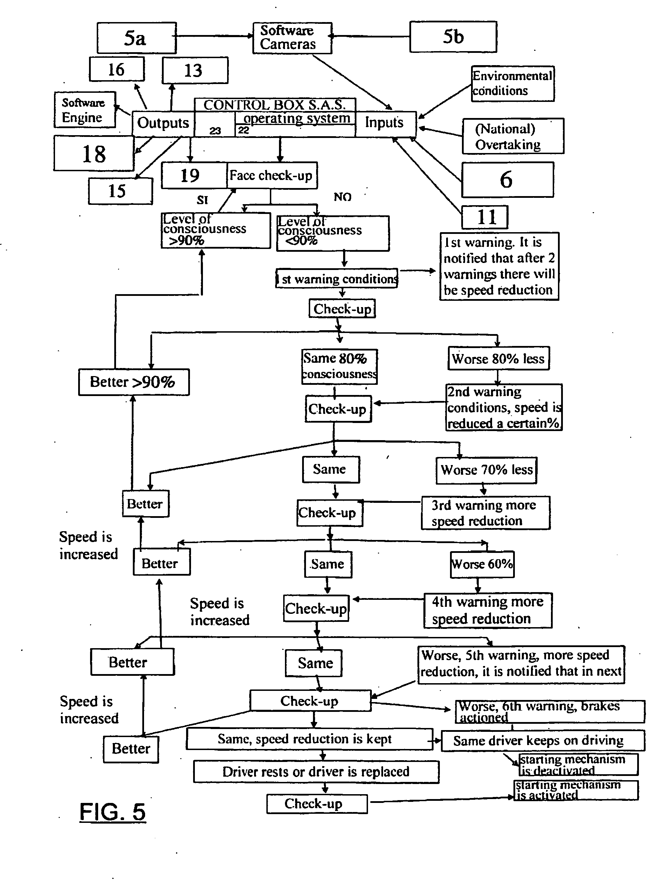

Figures 3 and 5 show flowcharts related to other possible actions which can be taken by the system with different warnings and degrees of consciousness.

| | |
|---|---|
| C > 0.90 → N.C. 1 | No action |
| 0.90 <= C < 0.80 → N.C. 2 | Warning 1: notification of future peak speed reduction in K factor. |
| 0.80<= C < 0.70 → N.C. 3 | Warning 2: peak speed reduction in K factor. |
| 0.70<= C < 0.60 → N.C. 4 | Warning 3: peak speed reduction in K factor. |
| 0.60<= C < 0.50 → N.C. 5 | Warning 4: peak speed reduction in another K factor and notification of future stop. |
| C <= 0.50 → N.C. 6 | Warning 5: stop notification. |

Therefore, the speed reduction due to the K factor=0,196 is applied, which would be carried out by the action module (3) for the preceding examples:

C1= 1, corresponds to N.C.1 and therefore no action is taken.
C2=0.55, corresponds to N.C.5 and therefore, there is a reduction of speed and the driver is notified about a possible stop if the degree of consciousness does not increase.

The reduction would be for a K factor=0.196 of the peak speed available. The peak speed is 150km/h, applying the K factor it would be:

$$Vf=0.196^*150=29.4km/h$$

C3=0.09, corresponds to N.C.6 (an unfit driver) and to Warning 5, so that the vehicle would have to stop.
It is worth repeating that even if K had a high value, the reduction would always apply until the maximum speed available reaches 120km/h (legal limit in Spain).

The values which have been assigned to the parameters Ka, Kn, Kh, Kni intend to serve as an example. The system enables them to be configured to adjust better to each place. The same applies for the number of warnings and ranks defining the level to which a given degree of consciousness belongs. Other possible embodiments can carry out a weighting adjustment of the peak speed by means of multiplying by a factor proportional to the C value besides K.

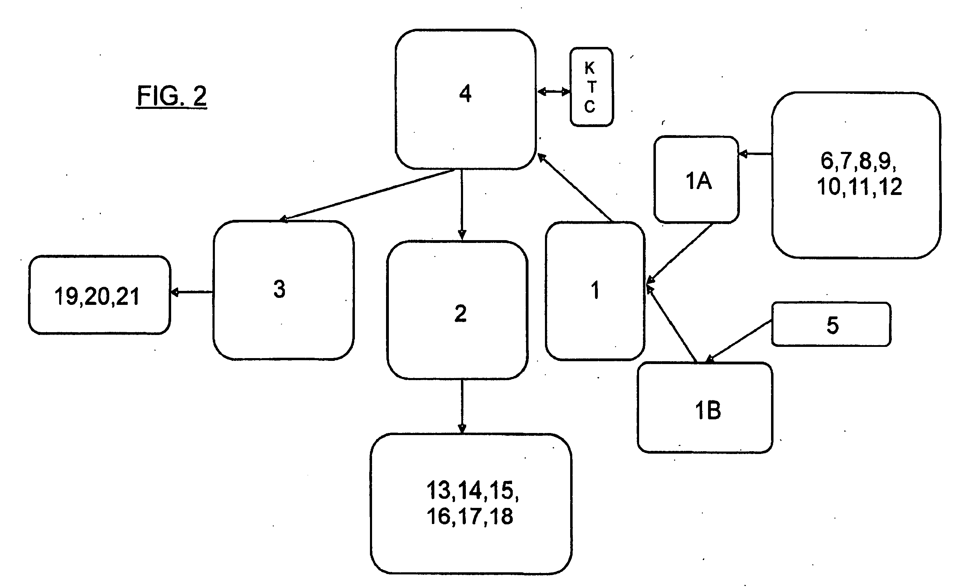

A particular embodiment is shown in figure 2. A control box, which we call SAS, controls the peripheral devices which collect information from outside and inside the vehicle through a bus (26) which follows a normalized communications protocol. (bus-CAN). Through a series of bus interconnections (26) with different devices the data are transmitted to a microprocessor (23). Between the connections there are included communications with the interior cameras (5) which collect information about the driver through an image recognition module (1b) (not shown in the figure).

This technology couples with the central box SAS to operate with the physiological parameters which estimates the degree of consciousness C. On the other hand, the exterior cameras (6) receive information on the kind of road and the vehicle maneuvers (double way, overtaking, etc.).

An input port (24) receives the information and the microprocessor (25) executes the operations of the previously described model through routines saved in a flash memory (22). The microprocessor (23) carries out the tasks of calculating the degree of consciousness for later deciding on the kind of action and alert associated. The bus-CAN (25) controller is in charge of this. The controller (25) governs the functioning of devices as the air conditioning (17), music system (13), an indicator (18) and the ABS brake system (19) according to the orders generated by the microprocessor (23).

In this embodiment the actions on the peak speed available in the injection system are carried out through the engine control box (20) and the ABS control box (19) governing the fuel injection and the brake system, respectively.

## Claims

1. Assistance system against sleepiness **characterized in that** it comprises:

    - a degree of consciousness estimate calculation module (4), configured to periodically estimate the value of some parameters C and K from the information gathered from a detection unit (1), with C representing the degree of consciousness and K representing the factor of modification of the peak speed available;
    - the detection unit (1) which in turn comprises a sensing module (1a) and an image recognition module (1b);
    - the sensing module (1a) configured to gather general information from a plurality of devices installed in the vehicle;
    - the image recognition module (1b) configured to recognize biometric information from the driver of the vehicle through at least an interior camera, said biometric information comprising:

        - nodding frequency (Fic),
        - time with eyes shut (Tp),
        - time with an inadequate head position (Tc);

    - an alert module (2) configured to control a plurality of devices in the vehicle according to the degree of consciousness estimate calculation module (4) to inform about the driver's degree of consciousness, C;

    **characterized in that**, it further comprises:

    - an action module (3) configured to gradually modify the peak speed available by the said factor K in the vehicle depending on the driver's degree of consciousness, C, through the injection system and the brake system.

2. Assistance system according to claim 1, **characterized in that** the sensing module (1a) is configured to collect information from:

    - means to identify the different environmental conditions (6, 8, 9, 10),
    - means to measure the instantaneous speed (12),
    - means to calculate the geographical position (11),
    - means to measure the distance to other close bodies (7).

3. Assistance system according to claim 1 or 2, **characterized in that** the image recognition module (1 b) is configured to detect the presence and collect information of a passenger in the vehicle.

4. System according to any of the preceding claims, **characterized in that** the value of the driver's degree of consciousness (C) depends on the nodding frequency (Fic), the time with the eyes shut (Tp) and the time with an inadequate head position (Tc).

5. Assistance system according to any of the preceding claims, **characterized in that** the value of the driver's degree of consciousness (C) is compared to a range of values to determine to what degree of consciousness it belongs.

6. Assistance system according to any of the preceding claims, **characterized in that** the value of the parameter K which modifies the peak speed available depends on the existence of a passenger in the vehicle and to outside environmental conditions of rain, fog, ice on the road or night.

7. Assistance system according to any of the preceding claims, **characterized in that** the plurality of devices controlled by the alert module (2) comprise:

    - a light indicator panel (18),
    - an air conditioning equipment (17),
    - a horn (16),
    - a music system or radio (13),
    - a voice recording with information about the following actions,

or a combination of the above.

8. Assistance system according to any of the preceding claims, **characterized in that** the action module (3) modifies the peak speed available in a factor K calculated by the degree of consciousness estimate calculation module (4) when the driver's degree of consciousness (C) decreases below an established level or threshold.

9. Assistance system according to claim 6, **characterized in that** the action module (3) increases the peak speed available in a K factor given by the degree of consciousness estimate calculation module (4) when the driver's degree of consciousness recovers over an established threshold.

10. Assistance system according to any of the preceding claims, **characterized in that** the action module (3) is configured to pre-tighten the safety belts of the occupants when actions are taken until the vehicle stops.

**Patentansprüche**

1. Assistenzsystem gegen Ermüdung, **dadurch gekennzeichnet, dass** es Folgendes umfasst:

- ein Rechnungsmodul (4) für die Abschätzung des Bewusstseinsgrads, welches ausgebildet ist, um den Wert von einigen Parametern C und K aus der von einer Erfassungseinheit (1) gesammelten Information periodisch abzuschätzen, wobei C den Bewusstseinsgrad und K den Veränderungsfaktor von der verfügbaren Spitzengeschwindigkeit darstellen;
- die Erfassungseinheit (1), welche wiederum ein Sensormodul (1a) und ein Bilderkennungsmodul (1b) umfasst;
- wobei das Sensormodul (1a) dazu ausgebildet ist, allgemeine Information aus einer Vielzahl von in dem Fahrzeug installierten Vorrichtungen zu sammeln;
- wobei das Bilderkennungsmodul (1b) dazu ausgebildet ist, biometrische Information von dem Fahrzeugfahrer mittels mindestens einer inneren Kamera zu erkennen, wobei die genannte biometrische Information Folgendes umfasst:

- Nickfrequenz (Fic),
- Zeit mit geschlossenen Augen (Tp),
- Zeit mit einer ungeeigneten Kopfstellung (Tc);

- ein Warnmodul (2), welches dazu ausgebildet ist, eine Vielzahl von Vorrichtungen in dem Fahrzeug gemäß dem Rechnungsmodul (4) für die Abschätzung des Bewusstseinsgrads zu steuern, um über den Bewusstseinsgrad des Fahrers, C, zu informieren;

**dadurch gekennzeichnet, dass** es zusätzlich Folgendes umfasst:

- ein Eingriffsmodul (3), welches dazu ausgebildet ist, die verfügbare Spitzengeschwindigkeit mit dem genannten Faktor K in dem Fahrzeug abhängig von dem Bewusstseinsgrad des Fahrers, C, durch das Einspritzsystem und das Bremssystem stufenweise zu verändern.

2. Assistenzsystem nach Anspruch 1, **dadurch gekennzeichnet, dass** das Sensormodul (1a) dazu ausgebildet ist, Information über

- Mittel zur Identifizierung von verschiedenen Umgebungsbedingungen (6, 8, 9, 10),
- Mittel zur Messung der momentanen Geschwindigkeit (12),
- Mittel zur Berechnung der geographischen Position (11),
- Mittel zur Messung des Abstands zu anderen Körpern (7) in der Nähe

zu sammeln.

3. Assistenzsystem nach Anspruch 1 oder 2, **dadurch gekennzeichnet, dass** das Bilderkennungsmodul (1b) dazu ausgebildet ist, die Gegenwart eines Passagiers in dem Fahrzeug zu erfassen und Information über denselben zu sammeln.

4. Assistenzsystem nach einem der vorstehenden Ansprüche, **dadurch gekennzeichnet, dass** der Wert des Bewusstseinsgrads (C) des Fahrers von der Nickfrequenz (Fic), der Zeit mit geschlossenen Augen (Tp) und der Zeit mit einer ungeeigneten Kopfstellung (Tc) abhängig ist.

5. Assistenzsystem nach einem der vorstehenden Ansprüche, **dadurch gekennzeichnet, dass** der Wert des Bewusstseinsgrads (C) des Fahrers mit einem Bereich von Werten verglichen wird, um den Bewusstseinsgrad, zu welchem er gehört, zu bestimmen.

6. Assistenzsystem nach einem der vorstehenden Ansprüche, **dadurch gekennzeichnet, dass** der Wert des Parameters K, welcher die verfügbare Spitzengeschwindigkeit verändert, von der Existenz eines Passagiers in dem Fahrzeug und von Bedingungen der Außenumgebung wie Regen, Nebel, Eis auf der Strasse oder die Nacht abhängig ist.

7. Assistenzsystem nach einem der vorstehenden Ansprüche, **dadurch gekennzeichnet, dass** die Vielzahl von Vorrichtungen, die von dem Warnmodul (2) gesteuert werden, Folgendes umfasst:

   - ein Lichtanzeigefeld (18),
   - eine Luftklimatisierungsanlage (17),
   - eine Hupe (16),
   - ein Radio- oder Musiksystem (13),
   - eine Sprachaufzeichnung mit Information über folgende Eingriffe,

   oder eine Kombination der Vorstehenden.

8. Assistenzsystem nach einem der vorstehenden Ansprüche, **dadurch gekennzeichnet, dass** das Eingriffsmodul (3) die verfügbare Spitzengeschwindigkeit mit einem Faktor K verändert, welcher durch das Rechnungsmodul (4) für die Abschätzung des Bewusstseinsgrads berechnet wird, wenn der Bewusstseinsgrad (C) des Fahrers unter eine bestimmte Schwelle oder ein bestimmtes Niveau senkt.

9. Assistenzsystem nach Anspruch 6, **dadurch gekennzeichnet, dass** das Eingriffsmodul (3) die verfügbare Spitzengeschwindigkeit mit einem Faktor K erhöht, welcher von dem Rechnungsmodul (4) für die Abschätzung des Bewusstseinsgrads bereitgestellt wird, wenn sich der Bewusstseinsgrad des Fahrers wieder über eine bestimmte Schwelle befindet.

10. Assistenzsystem nach einem der vorstehenden Ansprüche, **dadurch gekennzeichnet, dass** das Eingriffsmodul (3) dazu ausgebildet ist, die Sicherheitsgurte der Insassen vorzuspannen, während Eingriffe durchgeführt werden, bis das Fahrzeug anhält.

**Revendications**

1. Système d'assistance contre la somnolence **caractérisé en ce qu'**il comprend :

   - un module de calcul d'estimation du degré de conscience (4), configuré pour estimer périodiquement la valeur de quelques paramètres C et K à partir de l'information recueillie a partir d'une unité de détection (1), C représentant le degré de conscience e K représentant le facteur de modification de la vitesse de pointe disponible ;
   - l'unité de détection (1) qui à son tour comprend un module de détection (1a) et un module de reconnaissance d'images (1b) ;
   - le module de détection (1a) étant configuré pour recueillir de l'information générale à partir d'une pluralité de dispositifs installés dans le véhicule ;
   - le module de reconnaissance d'image (1b) étant configuré pour reconnaître l'information biométrique du conducteur du véhicule grâce à au moins une caméra intérieure, ladite information biométrique comprenant

     - la fréquence de hochement de tête (Fic),
     - le temps avec les yeux fermés (Tp),
     - le temps avec une position de tête inadéquate (Tc) ;

   - un module d'alerte (2) configuré pour contrôler une pluralité de dispositifs dans le véhicule selon le module de calcule d'estimation du degré de conscience (4) pour informer sur le degré de conscience C du conducteur ;

**caractérisé en ce qu'**il comprend :

- un module d'action (3) configuré pour modifier graduellement la vitesse de pointe disponible par ledit facteur K dans le véhicule en fonction du degré de conscience C du conducteur à travers le système d'injection et le système de frein.

2. Système d'assistance selon la revendication 1, **caractérisé en ce que** le module de détection (1a) est configuré pour recueillir de l'information à partir de :

- moyens d'identification de différentes conditions environnementales (6, 8, 9, 10),
- moyens de mesure de la vitesse instantanée (12),
- moyens de calcul de la position géographique (11),
- moyens de mesure de la distance des autres corps proches (7).

3. Système d'assistance selon la revendication 1 ou 2, **caractérisé en ce que** le module de reconnaissance d'image (1b) est configuré pour détecter la présence et recueillir l'information d'un passager dans le véhicule.

4. Système d'assistance selon l'une quelconque des revendications précédentes, **caractérisé en ce que** la valeur du degré de conscience (C) du conducteur dépend de la fréquence de hochement de tête (Fic), le temps des yeux fermés (Tp) et le temps avec une position de tête inadéquate (Tc).

5. Système d'assistance selon l'une quelconque des revendications précédentes, **caractérisé en ce que** la valeur du degré de conscience (C) du conducteur est comparée à un intervalle de valeurs pour déterminer à quel degré de conscience il appartient.

6. Système d'assistance selon l'une quelconque des revendications précédentes, **caractérisé en ce que** le paramètre K qui modifie la valeur de pointe disponible dépend de l'existence d'un passager dans le véhicule et des conditions environnementales extérieures de pluie, de brouillard, de verglas sur la route ou de nuit.

7. Système d'assistance selon l'une quelconque des revendications précédentes, **caractérisé en ce que** la pluralité de dispositifs contrôlés par le module d'alerte (2) comprend :

- un panneau indicateur lumineux (18),
- un équipement d'air conditionné (17),
- un avertisseur acoustique (16),
- un système de musique ou radio (13),
- un enregistrement de voix avec de l'information sur les actions suivantes,

ou une combinaison de ceux-ci

8. Système d'assistance selon l'une quelconque des revendications précédentes, **caractérisé en ce que** le module d'action (3) modifie la vitesse de pointe disponible dans un facteur K calculé par le module de calcul d'estimation du degré de conscience (4) lorsque le degré de conscience (C) du conducteur chute sous un niveau ou seuil établi.

9. Système d'assistance selon la revendication 6, **caractérisé en ce que** le module d'action (3) augmente la vitesse de pointe disponible dans un facteur K donné par le module de calcule d'estimation du degré de conscience (4) lorsque le degré de conscience du conducteur se rétablit au cours d'un seuil établi.

10. Système d'assistance selon l'une quelconque des revendications précédentes, **caractérisé en ce que** le module d'action (3) est configuré pour prétendre les ceintures de sécurité des occupants lors de la prise d'actions jusqu'à ce que l'arrête du véhicule

FIG. 1

FIG. 2

FIG. 3

EP 2 343 207 B1

CONTROL BOX S.A.S

MAIN PROGRAM: OPERATING SYSTEM

BUS-CAN

G.P.S 11

A.C 17

READ CAMERA
IDENTIFY OBJECTS, BLINKING
DECISION ALGORITHM
COMMUNICATION

FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2100790
- DE 69530459 D1
- US 20070182529 A1
- US 20030125855 A1